# EUROPEAN PATENT APPLICATION

(11) **EP 4 759 906 A1**
(43) Date of publication of application: **17.06.2026**
(21) Application number: 24851338.4
(22) Date of filing: 10.05.2024
(51) Int. Cl.: C10M 105/18, C09K 5/04, C10M 111/04, C10M 107/34, C10N 40/30

(54) **REFRIGERATOR OIL COMPOSITION AND WORKING FLUID FOR REFRIGERATOR**

(30) Priority: 09.08.2023 JP 2023130112
(71) Applicant: Japan Sun Oil Company, Ltd., Tokyo 102-0083 (JP)
(72) Inventor: IGUCHI Yasuhide, Tokyo 102-0083 (JP); SAITO Rei, Tokyo 102-0083 (JP); SUZUKI Yoshinori, Tokyo 102-0083 (JP)
(74) Representative: Ipsilon
(86) International application number: PCT/JP2024/017428
(87) International publication number: WO 2025/032904

(57) **Abstract**

Provided are a refrigeration oil composition and a working fluid for a refrigerating system, which are capable of reducing the amount of dissolved refrigerant while maintaining fluidity and the like equivalent to those in the related art with respect to a hydrocarbon refrigerant. The refrigeration oil composition is used for a hydrocarbon refrigerant, and contains, as a base oil, at least one kind of a base oil component A represented by the following general formula (I). 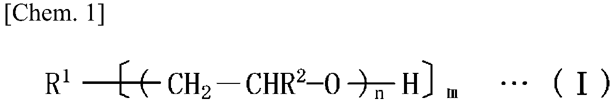 (In the formula, R¹ represents a glyceryl group, a trimethylolpropyl group, a ditrimethylolpropyl group, a pentaerythritol group, or a dipentaerythritol group, R² represents a hydrogen atom or a methyl group, m is a value set according to R₁ and is 3 to 6, and n is 2 to 11.)

## Description

### TECHNICAL FIELD

The present invention relates to a refrigeration oil composition for a hydrocarbon refrigerant, and a working fluid for a refrigeration system, which contains the refrigeration oil composition and a hydrocarbon refrigerant.

### BACKGROUND ART

In equipment and apparatuses for various applications using a refrigerant and a refrigeration cycle, the use of commonly used fluorinated hydrocarbon (HFC and HFO) refrigerants is being limited due to global warming prevention and chemical substance regulations. Prior to this trend, hydrocarbon refrigerants such as isobutane (R-600a) and propane (R-290) used in the first half of the 20th century have been reviewed. In Japan as well, R-600a has been adopted for household refrigerators in 2000 and has become the current mainstream as non-chlorofluorocarbon refrigerators.

In addition, with respect to the hydrocarbon refrigerant, the application of R-290 to equipment with a relatively small refrigerant charging amount, such as a small air conditioner, has started in China with the backing of Germany. For example, Patent Literature 1 proposes a refrigeration oil composition using a base oil having a specific structure for a propane refrigerant.

### CITATION LIST

### PATENT LITERATURE

Patent Literature 1: Chinese Patent No. 107353983

### SUMMARY OF INVENTION

### TECHNICAL PROBLEM

On the other hand, since hydrocarbon refrigerants are highly flammable, the hydrocarbon refrigerants are hardly applied to applications in which the amount of refrigerant is large, such as air conditioners and industrial refrigerators, and fluorinated hydrocarbon refrigerants having nonflammability or low flammability are still the mainstream for these applications. Therefore, in order to expand the application of the hydrocarbon refrigerant, there is a strong demand for reducing the amount of charging a refrigerant in the equipment as much as possible in order to ensure safety in refrigeration and air conditioning equipment manufacturers. That is, when the amount of the refrigerant dissolved in the refrigeration oil is small, the refrigerant charging amount can be reduced accordingly, and thus a refrigeration oil composition in which the hydrocarbon refrigerant is hardly dissolved is required.

The present invention has been made in view of such circumstances, and an object of the present invention is to provide a refrigeration oil composition capable of reducing the amount of dissolved refrigerant while maintaining fluidity and the like equivalent to those in the related art with respect to a hydrocarbon refrigerant. Another object of the present invention is to provide a working fluid for a refrigeration system, which has a smaller amount of hydrocarbon refrigerant and improved safety.

### SOLUTION TO PROBLEM

In order to solve the above problems, the present invention provides a refrigeration oil composition in the following (1).
(1) A refrigeration oil composition for a hydrocarbon refrigerant, the refrigeration oil composition containing, as a base oil, at least one kind of a base oil component A represented by the following general formula (I). 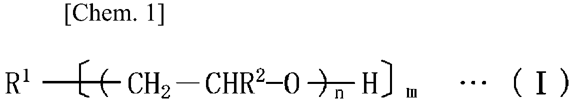 (In the formula, R¹ represents a glyceryl group, a trimethylolpropyl group, a ditrimethylolpropyl group, a pentaerythritol group, or a dipentaerythritol group, R² represents a hydrogen atom or a methyl group, m is a value set according to R¹ and is 3 to 6, and n is 2 to 11.)
   In addition, preferred aspects of the present invention related to the refrigeration oil composition relate to the following (2) to (4).
(2) The refrigeration oil composition according to (1), in which the base oil component A is contained in an amount of 10 mass% or more of a total amount of the base oil.
The refrigeration oil composition according to (1), in which the base oil component A has an average molecular weight of 300 to 2000.
(4) The refrigeration oil composition according to (1), in which the base oil contains the base oil component A and at least one kind of a base oil component B represented by the following general formula (II). 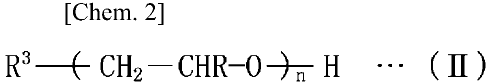 (In the formula, R represents a hydrogen atom or a methyl group, R³ represents a hydroxy group (HO-), CH₃O-, C₂H₅O-, C₃H₇O-, or C₄H₉O-, and n represents 6 to 33.)
   In addition, in order to solve the above problem, the present invention provides a working fluid for a refrigeration system in the following (5).
(5) A working fluid for a refrigeration system, the working fluid containing the refrigeration oil composition according to any one of (1) to (4) and a hydrocarbon refrigerant.

### ADVANTAGEOUS EFFECTS OF INVENTION

According to the refrigeration oil composition of the present invention, it is possible to reduce the amount of the dissolved hydrocarbon refrigerant while maintaining the performance of the refrigeration oil composition, such as fluidity, and the safety is more excellent.

In addition, according to the working fluid for a refrigeration system of the present invention, the working fluid for a refrigeration system also has high safety because the amount of dissolved hydrocarbon refrigerant is small while maintaining fluidity and the like. Therefore, when the working fluid for a refrigeration system of the present invention is used, refrigeration/a refrigeration system using a hydrocarbon refrigerant can be safely operated.

### DESCRIPTION OF EMBODIMENTS

Hereinafter, the present invention will be described in detail.

### [Refrigeration Oil Composition]

A refrigeration oil composition of the present invention is used for a hydrocarbon refrigerant and contains, as a base oil, at least one kind of a base oil component A represented by the following general formula (I).

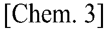

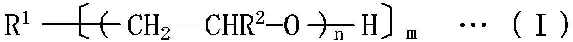

In the formula (I), R¹ represents a glyceryl group, a trimethylolpropyl group, a ditrimethylolpropyl group, a pentaerythritol group or a dipentaerythritol group, R² represents a hydrogen atom or a methyl group, m is a value determined according to R¹ and is 3 to 6, and n is 2 to 11. In addition, m corresponds to the number of hydroxy groups (OH groups) in R¹, and is preferably 3 to 4 from the viewpoint of low-temperature fluidity.

That is, in the base oil component A, R¹ at the terminal has three or more hydroxy groups. Accordingly, the amount of the dissolved hydrocarbon refrigerant can be reduced. The base oil component A can also be referred to as a polyalkylene glycol using a trihydric or more polyhydric alcohol as an initiator.

In addition, in order to obtain the base oil component A, at least one of glycerin (HOCH₂CH(OH)CH₂OH), trimethylolpropane (CH₃CH₂C(CH₂OH)₃), ditrimethylolpropane ((CH₃CH₂)(CH₂OH)₂CCH₂OCH₂C(CH₂CH₃)(CH₂OH)₂), pentaerythritol (C(CH₂OH)₄), and dipentaerythritol ((CH₂OH)₃CCH₂OCH₂C(CH₂OH)₃) as R¹ may be used as an initiator for the synthesis.

Considering the fluidity of the base oil, the average molecular weight of the base oil component A is preferably 300 to 2000, more preferably 400 to 1500, and still more preferably 800 to 1200.

The base oil component A may be used alone or in combination of two or more kinds thereof depending on the fluidity and the like.

The content of the base oil component A is preferably 10 mass% or more, more preferably 20 mass% or more, and still more preferably 40 mass% or more of the total amount of the base oil from the viewpoint of further reducing the compatibility with the hydrocarbon refrigerant. In addition, the upper limit of the content of the base oil component A is not particularly limited, and it is appropriate that the content of the base oil component A is 80 mass% or less, and preferably 60 mass% or less of the total amount of the base oil because the kinematic viscosity tends to increase as the content of the base oil component A increases.

The base oil may be composed only of the base oil component A, or may be a mixture of the base oil component A and another base oil component. The other base oil component is not limited as long as it is used as a base oil for a hydrocarbon refrigerant, and for example, a base oil component B represented by the following general formula (II) is preferable.

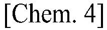

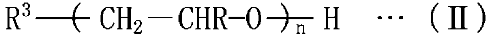

In the formula (II), R represents a hydrogen atom or a methyl group, R³ represents a hydroxy group (HO-), CH₃O-, C₂H₅O-, C₃H₇O-, or C₄H₉O-, and n represents 6 to 33. In addition, n is more preferably 12 to 21 from the viewpoint of low-temperature fluidity.

That is, the base oil component B is a polyalkylene glycol having a hydroxy group at one terminal or both terminals as a chemical structure.

Examples of the above polyalkylene glycol include polypropylene glycol, a copolymer (random or block) of polyethylene glycol and polypropylene glycol, and butanol-initiated polypropylene glycol. Furthermore, from the viewpoint of insulating properties, propylene glycol is more desirable than ethylene glycol.

It is appropriate that the content of the base oil component B is 90 mass% or less, preferably 80 mass% or less, and more preferably 60 mass% or less of the total amount of the base oil from the relationship with the content of the base oil component A. The lower limit of the content of the base oil component B is not particularly limited, and it is appropriate that the content of the base oil component B is 10 mass% or more, preferably 20 mass% or more, and more preferably 40 mass% or more of the total amount of the base oil from the relationship with the content of the base oil component A.

In addition, various additives can be added to the base oil according to the purpose as in the related art. For example, a demulsifier, a rust inhibitor, an antifoaming agent, an antioxidant, an acid scavenger, an anti-wear agent, an extreme pressure agent, an oiliness agent, a detergent dispersant, a pour point depressant, a viscosity index improver, a metal deactivator, and the like may also be added alone or in combination.

The kind of the hydrocarbon refrigerant (that is, a refrigerant containing only carbon and hydrogen and having 1 or more carbon atoms) is not limited, but methane, ethane, ethylene, propane, propylene, n-butane, 2-methylpropane, and the like are preferable.

### Examples

Hereinafter, the present invention will be further described with reference to Examples.

### (Base Oil Component)

The base oil components shown in Table 1 were prepared. That is, a base oil component (PAG-A in the table) in which R¹ is a glyceryl group, R² is a methyl group, and n is 5.1 in the general formula (I), and a base oil component (PAG-B in the table) in which R¹ is a glyceryl group, R² is a methyl group, and n is equal to 2 in the general formula (I) were prepared. The average molecular weight of PAG-A is about 1000, the average molecular weight of PAG-B is about 400, and PAG-A and PAG-B correspond to the base oil component A.

In addition, a base oil component (PAG-M in the table) in which R³ is a hydroxy group (OH group), R is a methyl group, and n is 16.6 in the general formula (II) was prepared. The average molecular weight of PAG-M is about 1000, which corresponds to the base oil component B.

Physical properties of each base oil component were examined in accordance with JIS. The physical properties are also shown in Table 1. In the examples described below, the physical property values are values conforming to JIS.

### [Table 1]

**[Table 1]**

| Table 1 Properties of base oil component | | | |
|---|---|---|---|
| | PAG-M | PAG-A | PAG-B |
| Density, 15°C g/cm³ | 1.0084 | 1.0263 | 1.0569 |
| Color, ASTM | L0.5 | L0.5 | L0.5 |
| Flash point, COC °C | 230 | 230 | 230 |
| Pour point, °C | -40 | -37.5 | -35 |
| Kinematic viscosity, 40°C mm²/s | 67.4 | 99.36 | 116.6 |
| Kinematic viscosity, 100°C mm²/s | 10.6 | 12.13 | 8.666 |
| Viscosity index | 146 | 113 | -2 |
| Total acid number, mgKOH/g | 0.01 | 0.01 | 0.01 |
| Water content, ppm | 100 | 100 | 100 |
| Volume resistivity, Ω•cm | 1×10¹⁰ | 1×10¹⁰ | 2×10⁹ |

### (Preparation of Base Oil)

Sample base oils 1 to 6 shown in Table 2 (Examples) were prepared by mixing the base oil components in the proportions shown in Table 2. For comparison, a base oil containing only PAG-M was used as a comparative base oil. The physical properties of the sample base oils are also shown in Table 2. In Table 2, "-" indicates that the corresponding component is not contained.

**[Table 2]**

| Table 2 Base oil properties | | | | | | | |
|---|---|---|---|---|---|---|---|
| | Sample base oil 1 | Sample base oil 2 | Sample base oil 3 | Sample base oil 4 | Sample base oil 5 | Sample base oil 6 | Comparative base oil |
| PAG-M (mass%) | 20 | 50 | 180 | 20 | 50 | 80 | 100 |
| PAG-A (mass%) | 80 | 50 | 120 | - | - | - | - |
| PAG-B (mass%) | - | - | - | 80 | 50 | 20 | - |
| Density, 15°C g/cm³ | 1.023 | 1.017 | 1.012 | 1.047 | 1.032 | 1.018 | 1.0084 |
| Color, ASTM | L0.5 | L0.5 | L0.5 | L0.5 | L0.5 | L0.5 | L0.5 |
| Flash point, COC °C | 230 | 230 | 230 | 230 | 230 | 230 | 230 |
| Pour point, °C | -37.5 | -37.5 | -40 | -35 | -37.5 | -40 | -40 |
| Kinematic viscosity, 40°C mm²/s | 91.5 | 81.1 | 72.2 | 104.4 | 88.2 | 74.6 | 67.4 |
| Kinematic viscosity, 100°C mm²/s | 11.8 | 11.3 | 10.9 | 9.08 | 9.65 | 10.2 | 10.6 |
| Viscosity index | 120 | 129 | 140 | 39 | 84 | 121 | 146 |
| Acid number, mgKOH/g | 0.01 | 0.01 | 0.01 | 0.01 | 0.01 | 0.01 | 0.01 |
| Water content, ppm | 100 | 100 | 100 | 100 | 100 | 100 | 100 |
| Volume resistivity, Ω•cm | 1×10¹⁰ | 1×10¹⁰ | 1×10¹⁰ | 2×10⁹ | 5×10⁹ | 1×10¹⁰ | 1×10¹⁰ |

Regarding physical property values, a refrigeration oil which is combined with a hydrocarbon refrigerant such as propane having a high electrical insulating property and is used in a compressor with a build-i electric motor is required to have an electrical insulating property of 1 x 10⁸ Ω•cm or more as a volume resistivity. For example, the volume resistivity of R-290, which is a hydrocarbon refrigerant, is 1 x 10¹³ Ω•cm, and the volume resistivity of a refrigeration oil to be combined therewith is required to be 1 x 10⁸ Ω•cm or more. All of the sample base oils satisfy this requirement.

### (Compatibility with Hydrocarbon Refrigerant)

Compatibility of the sample base oils 1 to 6 and the comparative base oil with R-290 which is a hydrocarbon refrigerant was evaluated. The results are shown in Table 3, and the unit of the concentration of the refrigerant in oil is "mass%". In Table 3, "-" indicates that the corresponding component is not contained.

**[Table 3]**

| Table 3 Compatibility between sample base oil and hydrocarbon refrigerant | | | | | | | |
|---|---|---|---|---|---|---|---|
| | Sample base oil 1 | Sample base oil 2 | Sample base oil 3 | Sample base oil 4 | Sample base oil 5 | Sample base oil 6 | Comparative base oil |
| PAG-M (mass%) | 20 | 50 | 80 | 20 | 50 | 80 | 100 |
| PAG-A (mass%) | 80 | 50 | 20 | | | | - |
| PAG-B (mass%) | - | - | - | 80 | 50 | 20 | - |
| Concentration of refrigerant in oil | | | | | | | |
| 60°C | 35 | 37 | 42 | 30 | 35 | 38 | 45 |
| 0°C | 25 | 28 | 33 | 18 | 24 | 26 | 40 |
| -20°C | 22 | 24 | 28 | 13 | 20 | 24 | 32 |
| -40°C | 18 | 20 | 24 | 10 | 16 | 20 | 26 |

As shown in Table 3, when the sample base oil was used, the amount of the dissolved refrigerant was smaller at each temperature than the case where the comparative base oil was used.

From the above, it was verified that by using the base oil containing the base oil component A according to the present invention, the amount of the dissolved hydrocarbon refrigerant can be reduced as compared with the amount of the dissolved hydrocarbon refrigerant in the related art.

### (Solubility of Additives)

It was verified that the performance of the refrigeration oil composition did not change even when various additives widely added to the refrigeration oil composition in the related art were added to the sample base oil. That is, a sample oil was prepared by adding a phenol-based antioxidant, an epoxy-based acid scavenger, an imide-based acid scavenger, a phosphate-based extreme pressure agent, and a siloxane-based antifoaming agent in the table to the above sample base oil. The dissolution state of each additive in each sample oil was visually observed, and the physical properties of each sample oil were examined. The results are shown in Table 4, and "∘" in the column of the additive in the table indicates that the additive is dissolved in the sample base oil.

**[Table 4]**

| Table 4 Formulation and properties of sample refrigeration oil | | | | | | | |
|---|---|---|---|---|---|---|---|
| | Sample oil I | Sample oil II | Sample oil III | Sample oil IV | Sample oil V | Sample oil VI | Oil in the related art |
| Sample base oil | 1 | 2 | 3 | 4 | 5 | 6 | PAG-M |
| Phenol-based antioxidant | ○ | ○ | ○ | ○ | ○ | ○ | ○ |
| Epoxy-based acid scavenger | ○ | ○ | ○ | ○ | ○ | ○ | ○ |
| Imide-based acid scavenger | ○ | ○ | ○ | ○ | ○ | ○ | ○ |
| Phosphate-based extreme pressure agent | ○ | ○ | ○ | ○ | ○ | ○ | ○ |
| Siloxane-based antifoaming agent | ○ | ○ | ○ | ○ | ○ | ○ | ○ |
| Density, 15°C g/cm³ | 1.026 | 1.021 | 1.016 | 1.051 | 1.036 | 1.022 | 1.012 |
| Color, ASTM | L0.5 | L0.5 | L0.5 | L0.5 | L0.5 | L0.5 | L0.5 |
| Flash point, COC °C | 224 | 224 | 224 | 224 | 224 | 224 | 224 |
| Pour point, °C | -37.5 | -37.5 | -40 | -35 | -37.5 | -40 | -40 |
| Kinematic viscosity, 40°C mm²/s | 86.7 | 76.9 | 68.4 | 99.0 | 83.6 | 70.7 | 63.9 |
| Kinematic viscosity, 100°C mm²/s | 11.5 | 11.0 | 10.6 | 8.82 | 9.38 | 9.95 | 10.3 |
| Viscosity index | 122 | 132 | 143 | 40 | 86 | 123 | 149 |
| Acid number, mgKOH/g | 0.01 | 0.01 | 0.01 | 0.01 | 0.01 | 0.01 | 0.01 |
| Water content, ppm | 100 | 100 | 100 | 100 | 100 | 100 | 100 |
| Volume resistivity, Ω•cm | 1×10¹⁰ | 1×10¹⁰ | 1×10¹⁰ | 2×10⁹ | 5×10⁹ | 1×10¹⁰ | 1×10¹⁰ |

As shown in Table 4, it can be seen that even when the base oil component A is contained, the addition of various additives is not affected, and the base oil can be used in the same manner as in the related art.

### (Thermal Stability)

The thermal stability of the sample oils was verified under the following test conditions. The results are shown in Table 5, and "o" in the column of catalyst change indicates no change.

### <Test Conditions>

Test method: shield tube test (in accordance with JIS and ASHRAE method)
Charging amount: sample oil/R-290 = 1 [mL]/1 [mL]
Catalyst: Fe, Cu, and Al
Water content: 100 [ppm] or less
Degree of vacuum: 0.1 [mmHg]
Temperature: 175 [°C]
Period: 14 [days]

**[Table 5]**

| Table 5 Thermochemical stability test results | | | | | | | | |
|---|---|---|---|---|---|---|---|---|
| | | Sample oil I | Sample oil II | Sample oil III | Sample oil IV | Sample oil V | Sample oil VI | Oil in the related art |
| Color, ASTM | | L0.5 | L0.5 | L0.5 | L0.5 | L0.5 | L0.5 | L0.5 |
| Catalyst change | Fe | ○ | ○ | ○ | ○ | ○ | ○ | ○ |
| | Cu | ○ | ○ | ○ | ○ | ○ | ○ | ○ |
| | Al | ○ | ○ | ○ | ○ | ○ | ○ | ○ |
| Precipitate | | No | No | No | No | No | No | No |

As shown in Table 5, it can be seen that even when the base oil component A is contained, the base oil can be used in the same manner as in the related art without lowering the thermal stability.

### (Hydrolytic Stability)

The hydrolytic stability of the sample oil was examined under the following test conditions. The results are shown in Table 6, and "∘" in the column of catalyst change indicates no change.

### <Test Conditions>

Test method: shield tube test (in accordance with JIS and ASHRAE method)
Charging amount: sample oil/R-290 = 8 [g]/0.6 [g]
Catalyst: Fe, Cu, and Al
Water content: 500 [ppm]
Degree of vacuum: 0.1 [mmHg]
Temperature: 175 [°C]
Period: 14 [days]

**[Table 6]**

| Table 6 Hydrolysis stability test results | | | | | | | | |
|---|---|---|---|---|---|---|---|---|
| | | Sample oil I | Sample oil II | Sample oil III | Sample oil IV | Sample oil V | Sample oil VI | Oil in the related art |
| Color, ASTM | | L0.5 | L0.5 | L0.5 | L0.5 | L0.5 | L0.5 | L0.5 |
| Acid number, mgKOH/g | | 0.01 | 0.01 | 0.01 | 0.05 | 0.03 | 0.02 | 0.01 |
| Catalyst change | Fe | ○ | ○ | ○ | ○ | ○ | ○ | ○ |
| | Cu | ○ | ○ | ○ | ○ | ○ | ○ | ○ |
| | Al | ○ | ○ | ○ | ○ | ○ | ○ | ○ |
| Precipitate | | No | No | No | No | No | No | No |

As shown in Table 6, it can be seen that even when the base oil component A was contained, the hydrolytic stability did not decrease, and the base oil can be used in the same manner as in the related art.

As shown in the above Examples, even when the base oil component A is contained, the base oil can be used in the same manner as in the related art without deteriorating the physical properties of the refrigeration oil composition, and the amount of the hydrocarbon refrigerant used can be reduced, so that the safety can be further enhanced.

### [Working Fluid for Refrigeration System]

The present invention relates to a working fluid for a refrigeration system, which contains the above refrigeration oil composition and a hydrocarbon refrigerant.

As the hydrocarbon refrigerant, methane, ethane, ethylene, propane, propylene, n-butane, 2-methylpropane, and the like are preferable.

According to the present invention, the amount of the hydrocarbon refrigerant used can be further reduced, and safety as a working fluid for a refrigeration system is further enhanced.

Although various embodiments have been described above, it is needless to say that the present invention is not limited to such examples. It is clear that those skilled in the art can think of various modifications or alterations within the scope of the claims, and it is understood that these also naturally fall within the technical scope of the present invention. In addition, the components in the above-described embodiments may be freely combined without departing from the gist of the present invention.

The present application is based on Japanese Patent Application No. 2023-130112 filed on August 9, 2023, the contents of which are incorporated herein by reference.

## Claims

1. A refrigeration oil composition for a hydrocarbon refrigerant, the refrigeration oil composition comprising, as a base oil, at least one kind of a base oil component A represented by the following general formula (I): 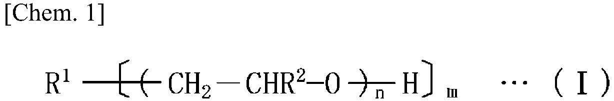 wherein in the formula (I), R¹ represents a glyceryl group, a trimethylolpropyl group, a ditrimethylolpropyl group, a pentaerythritol group, or a dipentaerythritol group, R² represents a hydrogen atom or a methyl group, m is a value set according to R₁ and is 3 to 6, and n is 2 to 11.

2. The refrigeration oil composition according to claim 1, wherein the base oil component A is contained in an amount of 10 mass% or more of a total amount of the base oil.

3. The refrigeration oil composition according to claim 1, wherein the base oil component A has an average molecular weight of 300 to 2000.

4. The refrigeration oil composition according to claim 1, wherein the base oil contains the base oil component A and at least one kind of a base oil component B represented by the following general formula (II): 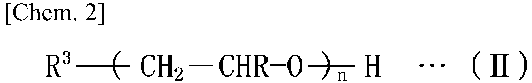 wherein in the formula (II), R represents a hydrogen atom or a methyl group, R³ represents a hydroxy group (HO-), CH₃O-, C₂H₅O-, C₃H₇O-, or C₄H₉O-, and n represents 6 to 33.

5. A working fluid for a refrigeration system, the working fluid comprising the refrigeration oil composition according to any one of claims 1 to 4 and a hydrocarbon refrigerant.
